# EUROPÄISCHE PATENTSCHRIFT

(11) **EP 2 284 570 B1**
(45) Veröffentlichungstag und Bekanntmachung des Hinweises auf die Patenterteilung: **21.10.2020**
(21) Anmeldenummer: 10169754.8
(22) Anmeldetag: 16.07.2010
(51) Int. Cl.: G01S 19/14, G01S 19/13, G01S 19/09, G03B 17/24, H04N 1/00

(54) **Empfangsvorrichtung zum Empfang und zur Verarbeitung von Navigationssatellitendaten und Verfahren hierfür**
Device for receiving and processing data of navigation satellites and method therefor
Dispositif pour la réception et le traitement de données de satellites de navigation et son procédé

(30) Priorität: 22.07.2009 DE 102009027922
(43) Veröffentlichungstag der Anmeldung: 16.02.2011
(73) Patentinhaber: Robert Bosch GmbH, 70442 Stuttgart (DE)
(72) Erfinder: May, Thomas, 38302 Wolfenbuettel (DE); Walossek, Erik, 30655 Hannover (DE); Jakoblew, Sascha, 31141 Hildesheim (DE)

(56) Entgegenhaltungen:
- WO-A1-2007/096801
- WO-A1-2010/009924
- WO-A2-2007/034419
- US-A- 5 916 300
- US-A1- 2005 162 312
- US-A1- 2006 208 943
- US-B1- 6 714 159

## Beschreibung

Die Erfindung betrifft eine Empfangsvorrichtung zum Empfang und zur Verarbeitung von Navigationssatellitendaten nach dem Oberbegriff von Anspruch 1 und ein diesbezügliches Verfahren.

### Stand der Technik

Navigationsvorrichtungen zum Empfang und zur Verarbeitung von Navigationssatellitendaten insbesondere zur Positionsbestimmung sind beispielsweise für Kraftfahrzeuge hinreichend bekannt geworden.

Weiterhin sind Kameras bekannt geworden, die digitale Bilder, wie Standbilder oder bewegte Bilder erzeugen können. Auch sind so genannte Multifunktionsgeräte bekannt geworden, die beispielsweise zum Telefonieren, zum Fotografieren und/oder zum Navigieren mittels GPS-Ortung verwendet werden können.

Um digitale Bilder, wie Bilddaten, mit Zusatzinformationen, wie Metadaten, versehen zu können, wurde in der Vergangenheit der EXIF-Standard geschaffen, mittels welchem Metadaten im Header der Datei der Bilddaten beispielsweise im JPEG- oder TIFF-Standard abgelegt werden können. Hierbei handelt es sich beispielsweise um Daten der verwendeten Kamera, des Kameraherstellers, des Datums, der Uhrzeit, der aktuellen Aufnahmeeinstellungen der Kamera, wie Brennweite, Belichtungszeit, Blende, Belichtungsprogramm etc. Auch ist grundsätzlich vorgesehen, dass GPS-Daten abgespeichert werden können, wobei aufgrund der hohen Prise die Verbreitung solcher Kameras mit GPS-Modulen noch sehr selten ist.

Bei den bekannten GPS-Empfängern ist nach dem Start der Empfangsvorrichtung diese erst einmal mit dem Suchen der Satelliten beschäftigt, was erheblich lange Zeit in Anspruch nehmen kann. Bei älteren Empfängern kann dies einige Minuten dauern. Mit modernen Vorrichtungen und modernen Algorithmen zur Satellitensuche und bei ausreichend Speicher und mit schnellen Prozessoren ist die Satellitensuche in kürzeren Zeiträumen möglich. Im Anschluss an die Satellitensuche beginnt die Empfangsvorrichtung mit dem Laden der Ephemeriden.

Jeder Satellit übertragt in einem Zeitraum von 36 Sekunden zyklisch seine Ephemeriden, das heißt seine Bahndaten, die von den Empfangsvorrichtungen zur Positionsbestimmung benötigt werden. Der Ausschnitt der Ephemeriden, die die Empfangsvorrichtung für eine erste Ortung benötigt wird in einem Intervall von 12 Sekunden Zeitdauer übertragen.

Die Wartezeit der Empfangsvorrichtung auf den benötigten Ephemeridensatz beträgt für jeden Satelliten daher etwa zwischen 12 und 48 Sekunden, wobei diese Daten für jeden Satelliten durchaus auch parallel empfangen werden können, so dass eine erste Ortung der Position nicht vor Ablauf von 12 bis 48 Sekunden nach dem Einschalten der Vorrichtung möglich ist.

Um den Empfang der Ephemeridendaten zu verkürzen können die Ephemeridendaten durch andere Kanäle übertragen werden oder sie können auf der Grundlage von älteren Daten geschätzt werden.

Diese Lösungen sind jedoch entweder nicht für mobile Anwendungen geeignet, sie sind kostenpflichtig oder ungenau.

Weiterhin ist durch die WO 2007/034419 A1 bekannt geworden, dass eine nachträgliche Positionsbestimmung erfolgen kann, wenn die Zeit der Datensammlung aufgezeichnet wurde. Da dies nicht immer der Fall ist oder die Zeit nicht unbedingt für jeden Datensatz aufgenommen werden kann, kann dieses Verfahren nicht zu dem gewünschten Erfolg führen.

Aus der WO 2007/034419 A2 sind ein Verfahren zum Bestimmen einer GPS-Standortbestimmung sowie ein GPS-Empfänger zum Durchführen dieses Verfahrens bekannt. Die Lehre der WO 2007/034419 A2 geht dabei aus von einem aus der WO 2004/090903 A1 bekannten Verfahren zum Anhängen einer Standortmarkierung an eine Bilddatei eines Fotos oder einer Videoaufzeichnung, die mit einer Digitalkamera aufgezeichnet sind, die eine GPS-Antenne und eine GPS-Empfangsstufe einschließlich eines Analog-Digital-Umsetzers zum Empfangenen von GPS-Signalen und zum Ausgeben von GPS-Signal-Abtastwerten umfasst. Das aus der WO 2004/090903 A1 bekannte Verfahren enthält dabei die folgenden Schritte: (i) nachdem ein Benutzer ein Foto oder eine Videoaufzeichnung aufgenommen hat, wird (a) eine Bilddatei erzeugt, die das genannte Foto oder die Videoaufzeichnung enthält, und werden (b) empfangene GPS-Signale abgetastet und die Abtastwerte der GPS-Signale mit einem Hinweis auf die Bilddatei des Fotos oder der Videoaufzeichnung, zu der die Abtastwerte der GPS-Signale gehören, abgespeichert; (ii) nachfolgend werden die Abtastwerte der GPS-Signale verarbeitet, um eine Standortbestimmung zu erhalten, und wird die Standortbestimmung an die Bilddatei angehängt.

Bei dem aus der WO 2004/090903 A1 bekannten Verfahren werden somit grundsätzlich von der Digitalkamera im ersten Schritt lediglich die Abtastwerte der GPS-Signale aufgenommen und gespeichert. Eine weitere Verarbeitung dieser Abtastwerte der GPS-Signale erfolgt grundsätzlich in einem späteren Schritt. Eine derartige Speicherung von Abtastwerten von GPS-Signalen und eine spätere Verarbeitung ermöglicht z.B. vorteilhaft eine Verarbeitung der Abtastwerte der GPS-Signale auf einem externen Computer oder, um die Lebensdauer der Batterie der Kamera zu verlängern, eine Verarbeitung in der Kamera nur dann, wenn die Kamera mit einer externen Spannungsquelle verbunden ist.

Das aus der WO 2004/090903 A1 bekannte Verfahren, bei dem die Verarbeitung der Abtastwerte zur Gewinnung einer Standortbestimmung einige Zeit später erfolgt als das Abtasten selbst, zeigt jedoch den Nachteil, dass in der Praxis der Fall auftreten kann, dass es unmöglich ist, eine Standortbestimmung für einen Satz von Abtastwerten von GPS Signalen zu erhalten. Beispielsweise kann im Augenblick der Abtastung eine kurzzeitige Hochfrequenzstörung oder eine zeitweilige Unterbrechung der Sichtlinie zu der Anzahl von Satelliten, die benötigt werden, um eine Standortbestimmung zu erhalten, auftreten, z.B. eine Abschattung durch ein hohes Fahrzeug in einer Straßenschlucht. Falls dann weiterhin ein GPS-Empfänger nach der anfänglichen Abtastung, jedoch vor der Verarbeitung der Abtastwerte zur Gewinnung einer Standortbestimmung, seinen Standort verändert, gibt es keine Möglichkeit, die Position des Empfängers zum Zeitpunkt der anfänglichen Abtastung wiederherzustellen.

Zur Vermeidung dieses Nachteils umfasst das in der WO 2007/034419 A2 beschriebene Verfahren die folgenden Schritte: (i) Abtasten empfangene GPS-Signale und Speichern der Abtastwerte; (ii) Durchführen einer vorläufigen Verarbeitung der Abtastwerte der GPS-Signale zum Bestimmen der Wahrscheinlichkeit, dass aus den Abtastwerten der GPS-Signale in einer späteren, endgültigen Verarbeitung der Abtastwerte der GPS-Signale eine Standortbestimmung erhalten werden kann; und (iii) im Anschluss an Schritt (ii) Durchführen einer endgültigen Verarbeitung der Abtastwerte der GPS-Signale zum Gewinnen einer Standortbestimmung.

Mittels der Durchführung einer vorläufigen Verarbeitung dieser Abtastwerte der GPS Signale zur Bestimmung der Wahrscheinlichkeit, dass aus den Abtastwerten der GPS Signale in einer späteren, endgültigen Verarbeitung der Abtastwerte der GPS Signale eine Standortbestimmung erhalten werden kann, lässt sich der vorbeschriebene Nachteil vermeiden, und bei einem negativen Ergebnis der Bestimmung der Wahrscheinlichkeit lassen sich die obigen Schritte (i) und (ii) wiederholen.

Aus der WO 2007/096801 A1 sind ein Verfahren zum Erzeugen einer Bilddatei und eine Digitalkamera zum Durchführen dieses Verfahrens bekannt. Das Verfahren umfasst die folgenden Schritte: (i) Erzeugung und Speicherung von Bilddaten, die zu einem Foto oder einer Videoaufzeichnung gehören; (ii) Abtastung empfangener GPS Signale und Speicherung der resultierenden Abtastwerte der GPS Signale, auch als GPS-Rohdaten bezeichnet und (iii) Erzeugung einer einzelnen Datei, die sowohl die Bilddaten als auch die GPS-Rohdaten enthält.

Im Gegensatz zu einer getrennten Abspeicherung einerseits der Bilddaten und andererseits der GPS-Rohdaten zusammen mit einem Hinweis auf die Bilddatei des Fotos oder der Videoaufzeichnung, zu der die Abtastwerte des GPS Signals gehören, wie sie aus der WO 2004/090903 A1 bekannt ist, wird bei dem aus der WO 2007/096801 A1 bekannten Verfahren als zusätzlicher Vorteil noch eine vereinfachte Handhabung der Bilddaten und der GPS-Rohdaten durch deren Zusammenfassung in einer einzigen Datei genannt.

Aus der US 6,714,159 B1 ist ein Verfahren zum Durchführen einer Standortbestimmung bekannt, in welchem ein Frequenzspreizungssignal empfangen wird, das mit einem Wiederholungscode moduliert ist und von Satelliten ausgestrahlt wird. Das Verfahren umfasst die Verfahrensschritte des Erfassens des empfangenen modulierten Frequenzspreizungssignals, Messen der Codephase des empfangenen modulierten Frequenzspreizungssignals, und Empfangen der Ephemeriden-Parameter von Satelliten, die in der Standortbestimmung benutzt werden. Weiterhin werden bei dem Verfahren die Messergebnisse der Codephase gespeichert, die wenigstens zum Teil vor dem Empfangen der Ephemeriden-Parameter gemessen worden sind, wobei die gespeicherten Messergebnisse der Codephase für die Standortbestimmung benutzt werden, nachdem die Ephemeriden-Parameter empfangen worden sind.

### Darstellung der Erfindung, Aufgabe, Lösung, Vorteile

Bei einigen Anwendungen, wie beispielsweise bei der Positionsspeicherung bei digitalen Foto- und Videodaten durch solche Daten aufnehmende Foto- bzw. Videokameras ist die schnelle Positionsbestimmung nach dem Einschalten eher weniger bedeutend. Interessanter ist jedoch die sichere nachträgliche Positionsbestimmung für zuvor aufgenommene Bilddaten, die mit der Kamera aufgenommen wurden.

Es ist daher die Aufgabe der Erfindung, eine Empfangsvorrichtung zu schaffen, die die Nachteile des Standes der Technik verbessert und mittels welcher nachträglich eine Positionsbestimmung durchgeführt werden kann. Auch ist es die Aufgabe ein entsprechendes Verfahren zu schaffen.

Dies wird erreicht mit den Merkmalen nach Anspruch 1.

Erfindungsgemäß wird eine Empfangsvorrichtung zum Empfang und zur Verarbeitung von Satellitendaten geschaffen, wobei durch die Empfangsvorrichtung Satellitendaten empfangbar sind und in einem Speicher abspeicherbar sind, wobei durch die Empfangsvorrichtung zur Positionsbestimmung Ephemeridendaten einer vorbestimmten Anzahl von Satelliten verwendbar sind und diese durch die Empfangsvorrichtung empfangbar sind und zur Positionsbestimmung ver wendbar sind, wobei bei Nichtvorliegen der benötigten Ephemeridendaten durch die Empfangsvorrichtung Satelliten-Rohdaten empfangbar sind und speicherbar sind zur nachträglichen Positionsbestimmung, wobei die Rohdaten umfassen: Codephase, Trägerphase, Datenbits undwahlweise Signalqualität.

Dadurch wird erreicht, dass bei Vorliegen der benötigten Ephemeridendaten die Position bestimmt wird und abgespeichert wird und bei keinem Empfang oder keinem vollständigen Vorliegen der benötigten Daten ein Rohdatensatz empfangen wird und abgespeichert wird, damit nachträglich bei Vorliegen der Ephemeridendaten die Position später bestimmt wird.

Die Empfangsvorrichtung kann weiterhin Bilddaten aufnehmen und/oder abspeichern, wobei die Empfangsvorrichtung vorteilhaft eine bilddatenaufnehmende Kamera ist, wie eine Kamera für stehende oder bewegte Bilder ist.

Das erfindungsgemäße Verfahren sieht vor, dass eine Empfangsvorrichtung Satellitendaten empfängt und in einem Speicher speichert, wobei die Empfangsvorrichtung zur Positionsbestimmung Ephemeridendaten und/oder Satelliten-Rohdaten empfängt und speichert zur nachträglichen Positionsbestimmung, wobei die Rohdaten folgende Daten umfassen: Codephase, Trägerphase, Datenbits undwahlweise Signalqualität. Es werden die Satelliten-Rohdaten verwendet, wenn die Ephemeridendaten nicht vorliegen.

Es ist vorgesehen, dass die Empfangsvorrichtung Satellitendaten empfängt und in einem Speicher speichert, wobei die Empfangsvorrichtung zur Positionsbestimmung Ephemeridendaten einer vorbestimmten Anzahl von Satelliten verwendbar sind, diese empfängt und zur Positionsbestimmung verwendet, wobei bei Nichtvorliegen der benötigten Ephemeridendaten die Empfangsvorrichtung Satelliten-Rohdaten empfängt und speichert zur nachträglichen Positionsbestimmung, wobei die Rohdaten folgende Daten umfassen: Codephase, Trägerphase, Datenbits und wahlweise Signalqualität.

Die Empfangsvorrichtung ist dazu ausgebildet, zu signalisieren, ob noch keine Positionsbestimmung durchgeführt werden konnte, eine nachträgliche Positionsbestimmung mit gültigen Ephemeridendaten jedoch möglich ist, da die dafür notwendigen Rohdaten zusammen mit den aufgenommenen Bilddaten gespeichert werden, oder ob eine sofortige Positionsbestimmung möglich ist, so dass anstelle der Rohdaten die aktuell ermittelte Position zu den Bilddaten abgespeichert wird.

Mit der erfindungsgemäßen Vorrichtung kann vorteilhaft die Position eines bewegten GNSS-Empfängers in einem teilweisen oder gesamten Zeitraum seines Betriebs rekonstruiert werden selbst wenn in der Zeit direkt nach dem Einschalten und der Aufnahme des ersten Fotos noch keine vollständigen Ephemeridendaten geladen wurden bzw. Einschaltzeit der Kamera zu kurz war, um diese Daten überhaupt vollständig laden zu können.

Bei der erfindungsgemäßen Vorrichtung wird durch die vorteilhaft mobile Vorrichtung ausschließlich auf die vom GPS- oder GNSS-Satelliten übertragenen Signale zurückgegriffen.

Weitere Vorteile ergeben sich aus den Unteransprüchen und aus der nachfolgenden Figurenbeschreibung.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine Blockschaltbild zur Erläuterung der Erfindung, und
- Fig. 2: eine schematische Darstellung einer Empfangsvorrichtung.

### Bevorzugte Ausführung der Erfindung

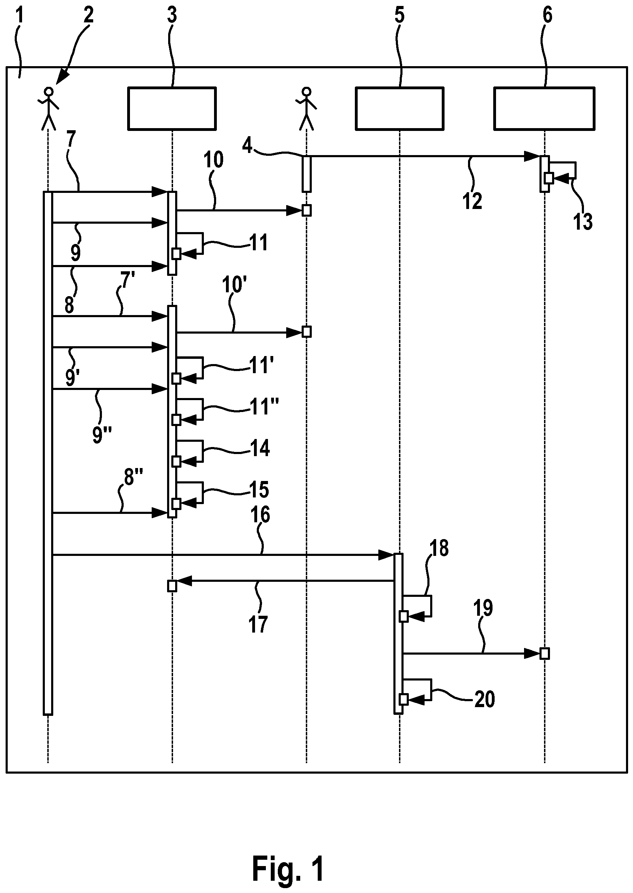

Die Figur 1 zeigt ein Blockschaltbild 1 zur Erläuterung eines Verfahrens zur nachträglichen Positionsbestimmung einer Empfangsvorrichtung 100 zum Empfang und zur Verarbeitung von Navigationssatellitendaten. Das Bezugszeichen 2 repräsentiert den Fotografen einer Kamera. Das Bezugszeichen 3 repräsentiert eine Kamera. Das Bezugszeichen 4 repräsentiert ein globales Navigationssatellitensystem (GNSS), wie ein GPS-System und/oder alternative Systeme. Das Bezugszeichen 5 repräsentiert ein Computerprogramm oder eine auf einem Computer lauffähiges Verfahren. Das Bezugszeichen 6 repräsentiert einen Ephemeridendatenspeicher.

Ausgehend von dem Fotografen 2 kann der Fotograf 2 die Kamera 3 einschalten 7, fotografieren 9 oder die Kamera wieder ausschalten 8. Das Einschalten wird durch den Pfeil mit dem Bezugszeichen 7 repräsentiert, das Ausschalten wird durch den Pfeil mit dem Bezugszeichen 8 repräsentiert und das Fotografieren wird durch den Pfeil mit dem Bezugszeichen 9 repräsentiert.

In einem ersten Prozess wird die Kamera durch den Fotografen eingeschaltet, siehe Pfeil mit Bezugszeichen 7. Bei dem Pfeil mit dem Bezugszeichen 10 werden Rohdaten des GNSS-Systems empfangen und bei dem Prozess 11 werden die empfangenen Rohdaten des GNSS-Systems gespeichert, wobei weiterhin auch die Fotodaten der Kamera 3 gespeichert werden. Vorteilhaft werden die Rohdaten des GNSS-Systems mit den Fotodaten gemeinsam gespeichert. Nachdem die Rohdaten der GNSS-Systems empfangen sind, siehe 11, werden bei Pfeil 12 die Ephemeridendaten permanent gespeichert und bei Pfeil 13 archiviert.

Die verwendete Kamera 3 dient als Empfangsvorrichtung 100 zum Empfang und zur Verarbeitung von Navigationssatellitendaten und kann vorteilhaft in nur relativ kurzer Zeit, von beispielsweise wenigen Sekunden oder Bruchteilen davon, GNSS-Rohdaten speichern, um nachträglich die Position der Aufnahme des Fotos bestimmen zu können. Als Kamera 3 kann eine Fotokamera zur Aufnahme von Standbildern und/oder eine Videokamera zur Aufnahme von bewegten Bildern verwendet werden.

In einem zweiten Prozess wird die Kamera 3 durch den Fotografen 2 wiederum eingeschaltet, siehe Pfeil 7'. Bei Pfeil 10' werden Rohdaten des GNSS-Systems empfangen. Anschließend kann bei Pfeil 9' fotografiert werden.

Bei Pfeil 11' werden die empfangenen Rohdaten des GNSS-Systems gespeichert, wobei weiterhin auch die Fotodaten der Kamera 3 gespeichert werden. Bei Pfeil 9" wird weiterhin fotografiert. Bei Pfeil 11" werden die empfangenen Rohdaten des GNSS-Systems gespeichert, wobei weiterhin auch die Fotodaten der Kamera gespeichert werden.

Bei Pfeil 14 erfolgt der Empfang der Ephemeridendaten und die Berechnung der Position der Vorrichtung anhand der Ephemeridendaten.

Bei Pfeil 15 erfolgt die Berechnung der Position für einige oder alle vorhergehenden Aufnahmen von Standbildern und/oder von bewegten Bildern, für die die empfangenen Ephemeridendaten gültig sind.

Bei Pfeil 8" wird die Kamera 3 von dem Fotografen 2 wieder ausgeschaltet.

Bei Pfeil 16 werden die Aufnahmedaten der vorgenommenen Aufnahmen übertragen durch ein Computerprogramm 5 oder ein Verfahren welches beispielsweise als Computerprogramm 5 ausgeführt sein kann. Bei Pfeil 17 werden die Aufnahmedaten kopiert.

Bei Pfeil 18 werden die Positionsinformationen überprüft. Bei Pfeil 19 werden aus dem Ephemeridendatenspeicher 6 die Ephemeridendaten geholt, für die Aufnahmen, für die keine gültige Position vorliegt. Bei Pfeil 20 werden die Positionen von vorangegangenen Aufnahmen bestimmt, für die keine gültige Position vorliegt bzw. die keine gültige Position besitzen.

Bei der erfindungsgemäßen Vorrichtung ist die Speicherung der genauen Codephase und Trägerphase von jedem gefundenen Satelliten sowie die von ihm übertragenen Datenbits und die Signalqualität in der Empfangsvorrichtung, wie im GPS- oder GNSS-Empfänger, vorteilhaft, für die Zeit, in der schon eine Bildaufnahme gemacht wurde aber aufgrund noch nicht vorhandener Ephemeridendaten noch keine Positionsbestimmung durchgeführt werden konnte oder aufgrund der geringen Bereitschaftszeit nicht möglich sein wird.

Bis von ausreichend vielen Satelliten die Ephemeridendaten geladen wurden, kann sich die Kamera jedoch bereits wieder fortbewegen haben oder sie kann anschließend auch wieder in einer ungünstigen Position zur Satellitendatenempfang sein. Mit den gespeicherten Daten der Codephasen und Trägerphasen der Satelliten und mit den Datenbits ist es möglich, die Position des Empfängers nachträglich zu einem späteren Zeitpunkt zu bestimmen.

Dies kann durch ein Verfahren auf einem Computer oder Rechner oder aber auch in der Empfangsvorrichtung selbst erfolgen, wobei vorteilhaft damit auch die digitalen Bilddaten verarbeitet werden können. Die zum Empfangszeitpunkt gültigen Ephemeridendaten der empfangenen Satelliten werden durch das Verfahren, welches die nachträgliche Positionsbestimmung durchführt, aus einem Ephemeridendatenspeicher 6, wie beispielsweise einen Server im Internet, geladen. Dadurch sind alle Daten verfügbar, die benötigt werden, um eine genaue Positionsbestimmung auch nachträglich noch durchführen zu können. Die Verfügbarkeit dieser Daten ist die Voraussetzung für die nachträgliche Positionsbestimmung und den Zeitraum nach der Bilddatenaufnahme, innerhalb welchen die Positionsbestimmung noch möglich ist.

Bei in digitalen Foto- oder Videokameras verbauten GNSS-Empfängern sind die Empfangsbedingungen oftmals nicht optimal. Eine Kamera wird oft in einer undefinierten Lage in einer Tasche herumgetragen, häufig in Gebäuden ohne Satellitenempfang verwendet und oft auch nur kurz hervorgeholt, eingeschaltet, eine Bildaufnahme gemacht und dann wieder schnell eingesteckt. Diese Umstände beeinträchtigen eine zuverlässige Positionsbestimmung.

Erfindungsgemäß beginnt sofort nach dem Einschalten der Kamera mit integriertem GNSS-Empfänger, um eine Bildaufnahme zu machen, die Satellitensuche.

Je nach Empfangssituation werden die ersten vier Satelliten, was eine Minimumanzahl für die Ortung darstellt, nach einigen 100 ms bzw. nach einigen Sekunden gefunden.

Empfangsvorrichtung, wie die Kamera signalisiert nun beispielsweise in einer Anzeige, dass noch keine Positionsbestimmung durchgeführt werden konnte, eine nachträgliche Positionsbestimmung mit gültigen Ephemeridendaten jedoch möglich ist, da die dafür notwendigen GNSS-Rohdaten zusammen mit den aufgenommenen Bilddaten gespeichert werden. Zu diesen Rohdaten gehören Code- und Trägerphase sowie die Datenbits und gegebenenfalls auch Signalqualität. Dabei werden die Codephase und die Trägerphase relativ zum Systemtakt gemessen und abgespeichert.

Nach beispielsweise 48 Sekunden des Betriebs der Vorrichtung sind die Ephemeridendaten vorteilhaft vollständig geladen, es sei denn, dass eine Störung des Empfangs vorliegen sollte. Die Empfangsvorrichtung oder die Kamera signalisiert nun vorteilhaft in einer Anzeige, dass eine sofortige Positionsbestimmung möglich ist und speichert anstelle der GNSS-Rohdaten die aktuell ermittelte Position zu den Bilddaten des aufgenommenen Bildes bzw. Videos ab.

Wenn die aktuell empfangenen Ephemeriden auch für frühere Bilddaten und den dazu gespeicherten Ephemeridenrohdaten gültig sind, wie der richtige Satellit und die Ephemeriden nicht zu neu, so kann eine nachträgliche Positionsbestimmung ermöglicht werden, wie beispielsweise durch die Empfangsvorrichtung selbst. Dabei werden die neu bestimmten Positionsdaten statt der Rohdaten mit den Bilddaten zusammen gespeichert, so dass die Rohdaten durch die Positionsdaten ersetzt werden.

Wenn allerdings keine oder nicht verwendbare Ephemeriden empfangen werden können oder konnten, erfolgt die Positionsbestimmung nachträglich. Dies kann beispielsweise durch ein auf einem Rechner der Computer laufendes Verfahren durchgeführt werden, wobei es dazu vorteilhaft ist, wenn der Rechner oder Computer Zugang zu Ephemeridendaten hat oder diese bereits gespeichert hat.

Ein Verfahren oder Programm auf dem Rechner überprüft vorteilhaft, ob bei einzelnen oder allen Aufnahmen gültige Positionsdaten von der Empfangsvorrichtung bzw. Kamera abgespeichert wurden. Ist dies nicht der Fall, so ermittelt das Verfahren oder Programm anhand der zum Foto gespeicherten Zeit und den GNSS-Rohdaten die für die Positionsbestimmung benötigten Ephemeriden und lädt diese aus dem Ephemeridendatenspeicher. Damit kann vorteilhaft nachträglich die Position bestimmt werden, bei welcher die Bildaufnahme gemacht wurde. Anschließend kann anstelle der GNSS-Rohdaten die aktuelle Position zur Aufnahme abgespeichert werden.

Ein Ephemeridendatenspeicher kann zum Beispiel ein Server im Internet sein, der vom Betreiber des entsprechenden GNSS-Systems bereitgestellt wird, da dieser Betreiber Zugang zu sämtlichen Ephemeridendaten seiner Satelliten hat. Auch können diese Daten von Dritten als Dienstleister bereitgestellt werden, die die Ephemeride selbst aufzeichnen oder von Anderen erhalten und über einen längeren Zeitraum archivieren.

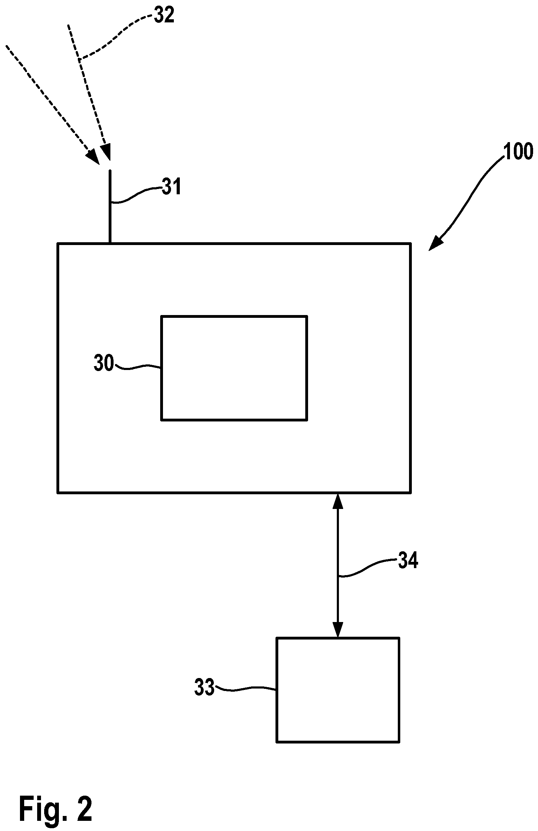

Die Figur 2 zeigt schematisch eine erfindungsgemäße Empfangsvorrichtung 100, die vorteilhaft in eine Kamera integriert ist. Die Vorrichtung 100 weist eine Anzeige 30 auf, auf welcher für den Bediener Daten angezeigt werden können. Auch weist die Empfangsvorrichtung eine Antenne 31 auf, mittels welcher Satellitendaten 32 empfangen werden können. Diese können Ephemeridenrohdaten oder Ephemeridendaten selbst sein.

Darüber hinaus kann die Vorrichtung 100 mit einer externen Vorrichtung 33 oder mit einem externen System in Verbindung 34 stehen, um Daten zu empfangen, wie beispielsweise die Ephemeridendaten zur nachträglichen Positionsbestimmung.

Wie bereits oben ausgeführt ist es besonders vorteilhaft, wenn die Empfangsvorrichtung zum Empfang und zur Verarbeitung von Satellitendaten vorgesehen ist, wobei durch die Empfangsvorrichtung Satellitendaten empfangbar sind und in einem Speicher abspeicherbar sind, wobei durch die Empfangsvorrichtung zur Positionsbestimmung vorteilhaft Ephemeridendaten einer vorbestimmten Anzahl von Satelliten benötigt sind und diese durch die Empfangsvorrichtung empfangbar sind und zur Positionsbestimmung verwendbar sind, wobei bei Nichtvorliegen der benötigten Ephemeridendaten durch die Empfangsvorrichtung Satelliten-Rohdaten empfangbar sind und speicherbar sind zur nachträglichen Positionsbestimmung, wobei die Rohdaten zumindest einzelne der folgenden Daten umfassen: Codephase, Trägerphase, Datenbits und/oder Signalqualität.

Auch ist es erfindungsgemäß vorteilhaft, wenn gemäß einem Verfahren zum Empfangen und zur Verarbeitung von Satellitendaten vorgegangen wird, wobei eine Empfangsvorrichtung Satellitendaten empfängt und in einem Speicher speichert, wobei die Empfangsvorrichtung zur Positionsbestimmung Ephemeridendaten einer vorbestimmten Anzahl von Satelliten benötigt, diese empfängt und zur Positionsbestimmung verwendet, wobei bei Nichtvorliegen der benötigten Ephemeridendaten die Empfangsvorrichtung Satelliten-Rohdaten empfängt und speichert zur nachträglichen Positionsbestimmung, wobei die Rohdaten zumindest einzelne der folgenden Daten umfassen: Codephase, Trägerphase, Datenbits und/oder Signalqualität.

## Patentansprüche

1. Empfangsvorrichtung (100) zum Empfang und zur Verarbeitung von Navigations-Satellitendaten (32), wobei die Empfangsvorrichtung (100) ausgebildet ist, Navigations-Satellitendaten (32) zu empfangen und in einem Speicher abzuspeichern, wobei die Empfangsvorrichtung (100) ausgebildet ist, zur Positionsbestimmung Ephemeridendaten einer vorbestimmten Anzahl von Satelliten zu verwenden, und ausgebildet ist, diese zu empfangen und zu speichern (12) und zur sofortigen Positionsbestimmung zu verwenden, wobei die Empfangsvorrichtung (100) ausgebildet ist, bei Nichtvorliegen der benötigten Ephemeridendaten Satelliten-Rohdaten zu empfangen (10; 10') und zu speichern (11; 11'; 11") zur nachträglichen Positionsbestimmung, wobei die Satelliten-Rohdaten folgende Daten umfassen: Codephase und Datenbits;
**dadurch gekennzeichnet,**
**dass** die Satelliten-Rohdaten zusätzlich folgende Daten umfassen: Trägerphase und wahlweise Signalqualität, wobei die Empfangsvorrichtung (100) zusätzlich Bilddaten abspeichern (11; 11'; 11") kann, wobei die Empfangsvorrichtung (100) bei Nichtvorliegen der benötigten Ephemeridendaten zusätzlich zu den Bilddaten die Satelliten-Rohdaten (11; 11'; 11") speichert, wobei der Bilddatensatz die Satelliten-Rohdaten umfasst, und wobei die Empfangsvorrichtung (100) die Satelliten-Rohdaten zur nachträglichen Berechnung der absoluten Position verwendet und im Bilddatensatz die Satelliten-Rohdaten durch diese Position ersetzt, sobald die Ephemeridendaten nachträglich empfangen worden sind (19), so dass ein Bilddatensatz entsteht, wie er vorliegen würde, wenn zum Zeitpunkt der Bildaufnahme die Ephemeridendaten bereits vorgelegen hätten, wobei die Empfangsvorrichtung (100) dazu ausgebildet ist, zu signalisieren, dass noch keine Positionsbestimmung durchgeführt werden konnte, eine nachträgliche Positionsbestimmung mit gültigen Ephemeridendaten jedoch möglich ist, da die dafür notwendigen Satelliten-Rohdaten zusammen mit den aufgenommenen Bilddaten gespeichert werden, oder dass eine sofortige Positionsbestimmung möglich ist, so dass anstelle der Satelliten-Rohdaten die aktuell ermittelte Position zu den Bilddaten abgespeichert wird.

2. Empfangsvorrichtung (100) nach Anspruch 1, **dadurch gekennzeichnet, dass** die Empfangsvorrichtung (100) eine Bilddaten aufnehmende Kamera (3) ist.

3. Verfahren (1) zum Empfangen und zur Verarbeitung von Navigations-Satellitendaten (32), wobei eine Empfangsvorrichtung (100) Navigations-Satellitendaten (32) empfängt und in einem Speicher speichert, wobei die Empfangsvorrichtung (100) zur Positionsbestimmung Ephemeridendaten einer vorbestimmten Anzahl von Satelliten verwendet, diese empfängt und speichert (12) und zur sofortigen Positionsbestimmung verwendet, wobei bei Nichtvorliegen der benötigten Ephemeridendaten die Empfangsvorrichtung (100) Satelliten-Rohdaten empfängt (10; 10') und speichert (11; 11'; 11") zur nachträglichen Positionsbestimmung, wobei die Satelliten-Rohdaten folgende Daten umfassen: Codephase und Datenbits;
**dadurch gekennzeichnet,**
**dass** die Satelliten-Rohdaten zusätzlich folgende Daten umfassen: Trägerphase und wahlweise Signalqualität, wobei die Empfangsvorrichtung (100) zusätzlich Bilddaten abspeichert (11; 11'; 11"), wobei die Empfangsvorrichtung (100) bei Nichtvorliegen der benötigten Ephemeridendaten zusätzlich zu den Bilddaten die Satelliten-Rohdaten (11; 11'; 11") speichert, wobei der Bilddatensatz die Satelliten-Rohdaten umfasst, und wobei die Empfangsvorrichtung (100) die Satelliten-Rohdaten zur nachträglichen Berechnung der absoluten Position verwendet und im Bilddatensatz die Satelliten-Rohdaten durch diese Position ersetzt, sobald die Ephemeridendaten nachträglich empfangen worden sind, so dass ein Bilddatensatz entsteht, wie er vorliegen würde, wenn zum Zeitpunkt der Bildaufnahme die Ephemeridendaten bereits vorgelegen hätten, wobei die Empfangsvorrichtung (100) signalisiert, dass noch keine Positionsbestimmung durchgeführt werden konnte, eine nachträgliche Positionsbestimmung mit gültigen Ephemeridendaten jedoch möglich ist, da die dafür notwendigen Satelliten-Rohdaten zusammen mit den aufgenommenen Bilddaten gespeichert werden, oder dass eine sofortige Positionsbestimmung möglich ist, so dass anstelle der Satelliten-Rohdaten die aktuell ermittelte Position zu den Bilddaten abgespeichert wird.

## Claims

1. Receiving apparatus (100) for receiving and processing navigation satellite data (32), wherein the receiving apparatus (100) is designed to receive navigation satellite data (32) and to store said navigation satellite data in a memory, wherein the receiving apparatus (100) is designed to use ephemeris data from a predetermined number of satellites for position determination, and is designed to receive and store (12) said ephemeris data and to use said ephemeris data for immediate position determination, wherein the receiving apparatus (100) is designed to receive (10; 10') satellite raw data, and to store (11; 11'; 11") said satellite raw data for later position determination, if the required ephemeris data are not available, wherein the satellite raw data comprise the following data: code phase and data bits;
**characterized**
**in that** the satellite raw data additionally comprise the following data: carrier phase and optionally signal quality, wherein the receiving apparatus (100) can additionally store (11; 11'; 11") image data, wherein the receiving apparatus (100) stores (11; 11'; 11") the satellite raw data in addition to the image data if the required ephemeris data are not available, wherein the image data record comprises the satellite raw data, and wherein the receiving apparatus (100) uses the satellite raw data for later calculation of the absolute position and replaces the satellite raw data with this position in the image data record as soon as the ephemeris data have been received later (19), so that an image data record is obtained as would be available if the ephemeris data had already been available at the time of the image recording, wherein the receiving apparatus (100) is designed to signal that it has not yet been possible to perform position determination, but later position determination using valid ephemeris data is possible, since the satellite raw data required therefor are stored together with the recorded image data, or that immediate position determination is possible, so that instead of the satellite raw data the currently ascertained position is stored for the image data.

2. Receiving apparatus (100) according to Claim 1, **characterized in that** the receiving apparatus (100) is a camera (3) recording image data.

3. Method (1) for receiving and processing navigation satellite data (32), wherein a receiving apparatus (100) receives navigation satellite data (32) and stores said navigation satellite data in a memory, wherein the receiving apparatus (100) uses ephemeris data from a predetermined number of satellites for position determination, receives and stores (12) said ephemeris data and uses said ephemeris data for immediate position determination, wherein the receiving apparatus (100) receives (10; 10') satellite raw data, and stores (11; 11'; 11") said satellite raw data for later position determination, if the required ephemeris data are not available, wherein the satellite raw data comprise the following data: code phase and data bits;
**characterized**
**in that** the satellite raw data additionally comprise the following data: carrier phase and optionally signal quality, wherein the receiving apparatus (100) additionally stores (11; 11'; 11") image data, wherein the receiving apparatus (100) stores (11; 11'; 11") the satellite raw data in addition to the image data if the required ephemeris data are not available, wherein the image data record comprises the satellite raw data, and wherein the receiving apparatus (100) uses the satellite raw data for later calculation of the absolute position and replaces the satellite raw data with this position in the image data record as soon as the ephemeris data have been received later, so that an image data record is obtained as would be available if the ephemeris data had already been available at the time of the image recording, wherein the receiving apparatus (100) signals that it has not yet been possible to perform position determination, but later position determination using valid ephemeris data is possible, since the satellite raw data required therefor are stored together with the recorded image data, or that immediate position determination is possible, so that instead of the satellite raw data the currently ascertained position is stored for the image data.

## Revendications

1. Dispositif de réception (100) pour la réception et le traitement de données de satellite de navigation (32), le dispositif de réception (100) étant conçu pour recevoir des données de satellite de navigation (32) et pour les stocker dans une mémoire, dans lequel le dispositif de réception (100) est conçu pour utiliser des données d'éphémérides d'un nombre prédéterminé de satellites pour la détermination de position, et est conçu pour les recevoir et les stocker (12) et pour les utiliser pour la détermination de position immédiate, dans lequel le dispositif de réception (100) est conçu pour recevoir des données brutes de satellite (10 ; 10') si les données d'éphémérides nécessaires n'existent pas, et pour les stocker (11 ; 11' ; 11") en vue d'une détermination de position a posteriori, les données brutes de satellite comprenant les données suivantes : la phase de code et les bits de données ;
**caractérisé en ce que** les données brutes de satellite comprennent de plus les données suivantes : la phase de porteuse et en option la qualité de signal, dans lequel le dispositif de réception (100) peut de plus stocker des données d'image (11 ; 11' ; 11"), dans lequel le dispositif de réception (100) stocke les données brutes de satellite (11 ; 11' ; 11") en plus des données d'image si les données d'éphémérides nécessaires n'existent pas, l'ensemble de données d'image comprenant les données brutes de satellite, et dans lequel le dispositif de réception (100) utilise les données brutes de satellite pour le calcul a posteriori de la position absolue et remplace les données brutes de satellite par cette position dans l'ensemble de données d'image dès que les données d'éphémérides ont été reçues a posteriori (19) de façon à créer un ensemble de données d'image tel qu'il existerait si les données d'éphémérides avaient déjà existé au moment de la prise de vue, dans lequel le dispositif de réception (100) est conçu pour signaler qu'aucune détermination de position n'a encore pu être effectuée mais qu'une détermination de position a posteriori avec des données d'éphémérides valables est possible puisque les données brutes de satellite nécessaires à cet effet ont été stockées conjointement avec les données d'image enregistrées, ou qu'une détermination de position immédiate est possible de sorte qu'au lieu des données brutes de satellite, la position déterminée actuellement est stockée avec les données d'image.

2. Dispositif de réception (100) selon la revendication 1, **caractérisé en ce que** le dispositif de réception (100) est une caméra (3) enregistrant des données d'image.

3. Procédé (1) pour la réception et le traitement de données de satellite de navigation (32), dans lequel un dispositif de réception (100) reçoit des données de satellite de navigation (32) et les stocke dans une mémoire, le dispositif de réception (100) utilisant des données d'éphémérides d'un nombre prédéterminé de satellites pour la détermination de position, les reçoit et les stocke (12) et les utilise pour la détermination de position immédiate, dans lequel, si les données d'éphémérides nécessaires n'existent pas, le dispositif de réception (100) reçoit des données brutes de satellite (10 ; 10') et les stocke (11 ; 11' ; 11") pour la détermination de position a posteriori, les données brutes de satellite comprenant les données suivantes : la phase de code et les bits de données ;
**caractérisé en ce que** les données brutes de satellite comprennent de plus les données suivantes : la phase de porteuse et en option la qualité de signal, dans lequel le dispositif de réception (100) stocke (11 ; 11' ; 11") de plus des données d'image, dans lequel le dispositif de réception (100) stocke en plus des données d'image les données brutes de satellite (11 ; 11' ; 11") si les données d'éphémérides nécessaires n'existent pas, l'ensemble de données d'image comprenant les données brutes de satellite, et dans lequel le dispositif de réception (100) utilise les données brutes de satellite pour le calcul a posteriori de la position absolue et remplace les données brutes de satellite par cette position dans l'ensemble de données d'image dès que les données d'éphémérides ont été reçues a posteriori de façon à créer un ensemble de données d'image tel qu'il existerait si les données d'éphémérides avaient déjà existé au moment de la prise de vue, dans lequel le dispositif de réception (100) signale qu'aucune détermination de position n'a encore pu être effectuée mais qu'une détermination de position a posteriori avec des données d'éphémérides valables est possible puisque les données brutes de satellite nécessaires à cet effet sont stockées conjointement avec les données d'image enregistrées, ou qu'une détermination de position immédiate est possible de sorte qu'au lieu des données brutes de satellite, la position déterminée actuellement est stockée avec les données d'image.
